# EUROPEAN PATENT APPLICATION

(11) **EP 4 067 431 A1**
(43) Date of publication of application: **05.10.2022**
(21) Application number: 20892381.3
(22) Date of filing: 27.11.2020
(51) Int. Cl.: C08L 23/12, C08L 23/16, C08L 23/08, C08K 3/013, C08J 9/00, A01K 75/04, B63C 9/08

(54) **POLYOLEFIN-BASED RESIN COMPOSITION FOR MANUFACTURING FOAM, AND FOAM AND MOLDED ARTICLE EACH MANUFACTURED THEREFROM**

(30) Priority: 29.11.2019 KR 20190156928
(71) Applicant: Lotte Chemical Corporation, Seoul, 05551 (KR)
(72) Inventor: LIM, Sung Hwan, Uiwang-Si Gyeonggi-do 16073 (KR); KWON, Yong Jin, Uiwang-Si Gyeonggi-do 16073 (KR); EOM, Se Yeon, Uiwang-Si Gyeonggi-do 16073 (KR); JANG, Jun Hyeok, Uiwang-Si Gyeonggi-do 16073 (KR)
(74) Representative: Germain Maureau
(86) International application number: PCT/KR2020/017196
(87) International publication number: WO 2021/107724

(57) **Abstract**

The present invention relates to a polyolefin-based resin composition for manufacturing a foam and a foam and a molded article each manufactured therefrom, the composition comprising: a random polypropylene; a polyolefin-based elastomer; and a nucleating agent, wherein the weight ratio of the random polypropylene and the polyolefin-based elastomer is about 1:0.3 to about 1:1.1. The polyolefin-based resin composition according to the present invention exhibits excellent fusing properties and mechanical properties and is low in absorption rate, and thus can be preferably used as a foam material applicable as a buoy.

## Description

### [Technical Field]

The present invention relates to a polyolefin resin composition for foam, foam and a molded article produced therefrom, and, more particularly, to a polyolefin resin composition that includes a random polypropylene and a polyolefin elastomer in a suitable ratio to secure good fusibility and mechanical properties so as to be advantageously used as an expandable material for buoys, foam and a molded article produced therefrom.

### [Background Art]

In general, foam products are formed of synthetic resins including polystyrene resins, polyurethane resins, polyolefin resins, and the like. The form products produced from these resins have low density and can provide suitable chemical, physical and mechanical properties to be widely used in various industrial fields including automobiles, buildings, and electronics.

For example, buoys are used as indicators of various farms, fishing grounds, nets, fish passes, routes, danger factors, such as reefs or sinking ships on the seabed, and the like, and are generally produced from expanded polystyrene (EPS) (Styrofoam). However, a Styrofoam buoy is very vulnerable to external shock and UV light and thus has very short lifespan. In addition, broken pieces of Styrofoam cause serious marine pollution.

Accordingly, various studies have been made to develop an eco-friendly buoy using recyclable expanded polypropylene (EPP). However, in manufacture of a thick buoy having a thickness of 30 cm or more using EPP, a fusing rate of EPP gradually decreases from a surface of the buoy toward the center thereof, making it difficult to achieve complete molding and causing severe deviation in properties and durability depending upon deviation of the fusing rate.

To solve such a problem, Patent Document 1 (Korean Patent No. 10-1246931) discloses a cylindrical buoy produced from expanded polypropylene (EPP), in which a core is inserted into the buoy in an axially vertical direction to supply steam into the buoy in order to achieve complete molding of the buoy. However, Patent Document 1 requires additional processes of manufacturing, assembling and post-processing a separate molded article for blocking an opening of the core, causing deterioration in productivity, and a mold for the separate molded article.

Patent Document 2 (Korean Patent No. 10-1599258) suggests a buoy produced from expanded polypropylene and expanded styrene, which are eco-friendly materials, and including a protective layer on an outer surface thereof to prevent damage by waves or wind. However, the protective layer is formed through an additional molding process in which an outer surface of an expanded molded article is melted, causing deterioration in productivity. Moreover, since it is difficult to secure sufficient protection of the molded article from external impact only through formation of the protective layer by supplying heat to a primarily molded article formed through expansion to melt the outer surface of the molded article, the molded article can be easily damaged. If a part of the buoy is damaged in this way, seawater is absorbed directly into the buoy, causing loss of buoyancy and reduction in service life thereof.

Therefore, there is a need for development of a polyolefin resin composition for foam, which secures good fusibility to allow uniform molding from a surface of a thick molded article having a thickness of 30 cm or more to a central region thereof and has good mechanical properties and a low absorption rate to produce a molded article applicable to a buoy.

### [Disclosure]

### [Technical Problem]

The present invention has been conceived to solve such problems in the art and it is an object of the present invention to provide a polyolefin resin composition for foam that has good fusibility, good mechanical properties and a low absorption rate to be advantageously used as an expandable material for buoys.

It is another object of the present invention to provide foam and a molded article produced from the polyolefin resin composition.

### [Technical Solution]

1. One embodiment of the present invention provides a polyolefin resin composition for foam including: a random polypropylene; a polyolefin elastomer; and a nucleating agent, wherein the random polypropylene and the polyolefin elastomer are present in a weight ratio of about 1:0.3 to about 1:1.1.
2. In embodiment 1, the resin composition may include: about 49.9% by weight (wt%) to about 79.9 wt% of the random polypropylene; about 20 wt% to about 50 wt% of the polyolefin elastomer; and about 0.01 wt% to about 0.5 wt% of the nucleating agent.
3. In embodiment 1 or 2, the polyolefin elastomer may include at least one selected from the group consisting of ethylene-butene rubber (EBR), ethylene-octene rubber (EOR), ethylene-propylene rubber (EPR), and ethylene-propylene diene monomer rubber (EPDM).
4. In any one of embodiments 1 to 3, the nucleating agent may include at least one selected from the group consisting of talc, zeolite, calcium carbonate, silica, kaolin, and clay.
5. In any one of embodiments 1 to 4, the resin composition may include at least one additive selected from the group consisting of an antioxidant, a UV stabilizer, a flame retardant, a coloring agent, a plasticizer, a heat stabilizer, a slip agent, and an antistatic agent.
6. In embodiment 5, the additive may be present in an amount of about 0.1 parts by weight to about 15 parts by weight relative to 100 parts by weight of the resin composition.
7. Another embodiment of the present invention provides a polyolefin resin foam produced from the polyolefin resin composition.
8. In embodiment 7, the foam may include expanded cells having an average diameter of about 30 µm to about 180 µm.
9. A further embodiment of the present invention provides a molded article produced from the polyolefin resin foam.
10. In embodiment 9, the molded article may be a buoy.
11. In embodiment 9 or 10, the molded article may include a hollow hole.

### [Advantageous Effects]

Embodiments of the present invention provide a polyolefin resin composition for foam which has good fusibility. In production of a thick molded article having a thickness of 30 cm or more using the foam, it is possible to achieve uniform molding (fusing between foam particles) from a surface of the molded article to a central region thereof. Accordingly, the polyolefin resin composition according to the present invention can provide a molded article having good durability without an additional post-process, thereby improving productivity.

In addition, a molded article produced from the foam has good properties in terms of tensile strength and elongation while exhibiting a low absorption rate. Accordingly, when the molded article is used as a buoy, the buoy can have extended service lifespan by reducing damage caused by waves or wind while minimizing loss of buoyancy due to absorption of seawater in a marine environment. In addition, the molded article exhibits insignificant shrinkage to provide good surface conditions even after a molding process at high temperature.

Furthermore, the molded article according to the present invention may not exhibit surface dents and cracks during a rope tightening test, in which a standard rope (10 mm) is wound around the molded article one turn and is then pulled using a rope tightening tester (Standard motor: 0.4 kW). Accordingly, the molded article can be particularly advantageously used as a buoy usually secured by a rope.

### [Best Mode]

Herein, the singular forms "a", "an" and "the" are intended to include the plural forms as well, unless the context clearly indicates otherwise.

Further, the terms "comprise," "include," and/or "have," when used in this specification, specify the presence of stated features, steps, operations, elements, and/or components, but do not preclude the presence or addition of one or more other features, steps, operations, elements, components, and/or groups.

Further, a numerical value related to a certain component is construed to include a tolerance range in interpretation of components, unless clearly stated otherwise.

As used herein to represent a specific numerical range, the expression "a to b" and "greater than or equal to a and less than or equal to b" mean "≥ a and ≤ b".

One embodiment of the present invention provides a polyolefin resin composition for foam, which includes: a random polypropylene; a polyolefin elastomer; and a nucleating agent, wherein the weight ratio of the random polypropylene to the polyolefin elastomer may be in the range of about 1:0.3 to about 1:1.1 (for example, 1:0.3, 1:0.4, 1:0.5, 1:0.6, 1:0.7, 1:0.8, 1:0.9, 1:1.0, or 1:1.1, in another example, about 1:0.4 to about 1:1.1). If the weight ratio of the random polypropylene to the polyolefin elastomer is less than about 1:0.3, foam produced from the resin composition can exhibit significant deviation in fusibility depending upon a distance from a heater. Accordingly, in production of a thick molded article having a thickness of 30 cm or more using such foam, the molded article exhibits reduction in fusibility with increasing distance from the heater, whereby fracture can easily occur at an interface between foam particles by external impact, thereby causing deterioration in mechanical properties. If the weight ratio of the random polypropylene to the polyolefin elastomer exceeds about 1:1.1, the molded article has low tensile strength and thus can be easily damaged by external impact, such as waves and wind.

Hereinafter, components of the polyolefin resin composition for foam according to the embodiment of the present invention will be described in detail.

The polyolefin resin composition for foam according to the embodiment includes a random polypropylene and a polyolefin elastomer as base resins and further includes a nucleating agent which stably makes expanded cells uniform and fine. According to one embodiment, the resin composition may include about 49.9 wt% to about 79.9 wt% of the random polypropylene, about 20 wt% to about 50 wt% or the polyolefin elastomer, and about 0.01 wt% to about 0.5 wt% of the nucleating agent. Within this range, the polyolefin resin composition can exhibit good fusibility, good mechanical properties and low absorption rate, and thus can be more preferably used as an expansion material for eco-friendly buoys.

According to one embodiment, the random polypropylene is a crystalline copolymer essentially consisting of propylene and may be a random copolymer obtained through copolymerization of propylene and a monomer (for example, α-olefin, such as ethylene, 1-butene, 4-methyl-1-pentene, and the like) excluding propylene. The monomer excluding propylene may be contained so as not to deteriorate characteristics of polypropylene and may be present in an amount of, for example, about 1 wt% to about 8 wt% relative to the weight of the random polypropylene, without being limited thereto.

According to one embodiment, the random polypropylene may be present in an amount of about 49.9 wt% to about 79.9 wt% (for example, 49.9 wt%, 50.9 wt%, 51.9 wt%, 52.9 wt%, 53.9 wt%, 54.9 wt%, 55.9 wt%, 56.9 wt%, 57.9 wt%, 58.9 wt%, 59.9 wt%, 60.9 wt%, 61.9 wt%, 62.9 wt%, 63.9 wt%, 64.9 wt%, 65.9 wt%, 66.9 wt%, 67.9 wt%, 68.9 wt%, 69.9 wt%, 70.9 wt%, 71.9 wt%, 72.9 wt%, 73.9 wt%, 74.9 wt%, 75.9 wt%, 76.9 wt%, 77.9 wt%, 78.9 wt%, or 79.9 wt%), specifically about 49.9 wt% to about 69.9 wt%, based on the total weight of the resin composition. Within this range of the random polypropylene, the resin composition can provide a molded article having better fusibility and mechanical properties, without being limited thereto.

The polyolefin elastomer according to the embodiment of the present invention can have high compatibility and bonding strength to the random polypropylene. Accordingly, the polyolefin elastomer can secure high flexural strength and flexural modulus while improving mechanical properties of the resin composition according to the present invention, and can provide a molded article having a stable and strong interior structure.

According to one embodiment, the polyolefin elastomer may be present in an amount of about 20 wt% to about 50 wt% (for example, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 29 wt%, or 50 wt%), specifically about 30 wt% to about 50 wt%, based on the total weight of the resin composition. Within this range of the polyolefin elastomer, the resin composition can provide a molded article having good properties and durability through uniform welding between foam particles from a surface of the molded article to the center thereof, without being limited thereto.

According to one embodiment, the polyolefin elastomer may be an α-olefin copolymer resin. Here, the α-olefin is a C₃ to C₁₂ hydrocarbon and may include at least one selected from the group consisting of 1-butene, 1-pentene, 1-hexene, 4-methyl-1-pentene, 1-heptene, 1-octene, 1-nonene, 1-decene, 1-undecene, and 1-dodecene, without being limited thereto. Specifically, according to one embodiment, the polyolefin elastomer may include at least one selected from the group consisting of ethylene-butene rubber (EBR), ethylene-octene rubber (EOR), ethylene-propylene rubber (EPR) and ethylene-propylene diene monomer rubber (EPDM), more specifically ethylene-octene, without being limited thereto.

According to the embodiment of the invention, the nucleating agent serves to reduce or make the sizes of the foam particles even.

According to one embodiment, the nucleating agent may be present in an amount of about 0.01 wt% to about 0.5 wt% (for example, 0.01 wt%, 0.1 wt%, 0.2 wt%, 0.3 wt%, 0.4 wt%, or 0.5 wt%) based on the total weight of the polyolefin resin composition. Within this range, the nucleating agent allows sufficient expansion without forming open cells due to weakening of expanded cells, without being limited thereto.

Specifically, according to one embodiment, the nucleating agent may include at least one selected from the group consisting of talc, zeolite, calcium carbonate, silica, kaolin, and clay, more specifically talc.

The polyolefin resin composition according to the present invention may further include typical additives used in the art. Specifically, according to one embodiment, the polyolefin resin composition may further include at least one selected from the group consisting of an antioxidant, a UV stabilizer, a flame retardant, a coloring agent, a plasticizer, a heat stabilizer, a slip agent, and an antistatic agent. These additives serve to improve performance and processability of the polyolefin resin composition and may be selected from among various additives used in the art without departing from the spirit of the present invention.

The content of each additive may be adjusted within an optimal range known to be used in preparation of the polyolefin resin composition in consideration of the total amount and the preparation process. Specifically, according to one embodiment, the additives may be present in an amount of about 0.1 parts by weight to about 15 parts by weight relative to 100 parts by weight of the polyolefin resin composition, without being limited thereto.

Another embodiment of the present invention provides a polyolefin resin foam produced from the polyolefin resin composition.

According to one embodiment, the foam may include expanded cells having an average diameter of about 50 µm to about 180 µm. Within this range, the foam has good mechanical strength and high buoyancy to be suitable for a buoy, without being limited thereto.

Such a polyolefin resin foam may be prepared by a method well-known in the art. For example, the method of preparing the foam may include: (1) preparing a polyolefin resin composition by mixing a random polypropylene, a polyolefin elastomer and a nucleating agent, (2) feeding the polyolefin resin composition and a foaming agent into a reactor, followed by heating and compressing, and (3) discharging a resin composition from the reactor at a lower pressure than pressure upon compressing.

Specifically, in step (1), the random polypropylene, the polyolefin elastomer and the nucleating agent may be mixed at the same time to prepare a mixture, which in turn is melted and extruded in an extruder, thereby preparing a polyolefin resin composition. Here, the polyolefin resin composition may be prepared in pellet or bead form, specifically mini-pellet form, through melt extrusion. The polyolefin resin composition prepared in mini-pellet form allows easy handling in a machining process. In preparation of the resin composition, various functional additives may be mixed together with the random polypropylene, the polyolefin elastomer and the nucleating agent. Melt-extrusion may be performed at a screw speed of about 50 rpm to about 500 rpm and at an extrusion temperature of about 150°C to about 240°C for a residing time of about 5 sec to about 90 sec, without being limited thereto. Extrusion may be performed using a single screw extruder, a twin screw extruder, a kneader, and the like.

In step (2), the polyolefin resin composition may be fed into the reactor in which a dispersion medium containing a dispersing agent is present, or may be fed together with the dispersing agent and the dispersion medium into the reactor. Then, a foaming agent may be fed into the reactor in which the polyolefin resin composition, the dispersing agent and the dispersion medium are present, followed by heating and compressing. Heating and compressing may be performed at a temperature of about 130°C to about 150°C under a pressure of about 20 bar to about 55 bar, without being limited thereto.

The dispersion medium may include at least one selected from the group consisting of water, ethylene glycol, glycerin, methanol, and ethanol, specifically water, without being limited thereto. The dispersant may include at least one selected from the group consisting of higher fatty acids, higher fatty acid esters, and higher fatty acid amides, without being limited thereto.

The foaming agent may be selected from any foaming agents well-known in the art. Specifically, the foaming agent may include at least one selected from the group consisting of propane, butane, hexane, pentane, heptane, cyclobutane, cyclohexane, methyl chloride, ethyl chloride, methylene chloride, dimethyl ether, diethyl ether, methyl ethyl ether, nitrogen, carbon dioxide, and argon, specifically carbon dioxide. The foaming agent may be present in an amount of about 5 parts by weight to about 50 parts by weight relative to 100 parts by weight of the polyolefin resin composition. Within this range, the foaming agent can secure uniform expansion, but is not limited thereto.

In step (3), the foaming agent is continuously fed into the reactor to maintain the pressure inside the reactor. Upon discharge of the resin composition from the reactor at low pressure, the foaming agent may be continuously fed into the reactor to prevent rapid decrease in inner pressure of the reactor such that the content inside the reactor can be discharged at constant pressure in order to obtain foam particles having uniform appearance and density.

A further embodiment of the present invention provides a molded article produced from the polyolefin resin foam. The molded article may be produced from a typical molding method well-known in the art. For example, the molded article may be obtained by filling a mold with the polyolefin resin foam, heating the mold using a heating medium, such as steam and the like, followed by cooling.

The foam exhibits good fusibility to provide a molded article having good durability through uniform molding (fusion between foam particles) from a surface thereof to the center thereof even in production of a thick molded article having a thickness of 30 cm or more. Such a molded article may be used without limitation in a wide range of applications, such as packaging materials, building materials, automobile parts materials, marine structure materials, and the like. Specifically, according to one embodiment, the molded article may be a buoy. When the molded article is used as a buoy, good mechanical properties of the molded article prevent the molded article from being easily damaged upon collision with seawater or an object floating on the seawater and a low absorption rate of the molded article can minimize loss of buoyancy due to absorption of seawater in a marine environment, thereby extending lifespan of the molded article.

According to one embodiment, the molded article may include a hollow hole. With the hollow hole, the molded article exhibits further reduction in deviation of fusibility therein, thereby enabling complete molding of the interior of the product.

Next, the present invention will be described in more detail with reference to some examples. It should be understood that these examples are provided for illustration only and are not to be in any way construed as limiting the present invention.

### EXAMPLE

### Example 1

59.9 wt% of random polypropylene (Manufacturer: Lotte Chemical Co., Ltd., Product Name: SEP-550, propylene-ethylene random copolymer (random PP)), 40 wt% of a polyolefin elastomer (Manufacturer: LG Chemical Co., Ltd., Product Name: LUCENE LC090, ethylene-octene rubber (EOR)) and 0.1 wt% of talc (Manufacturer: Koch Co., Ltd, Product Name: KCM-6300, number average particle diameter: 4.0 µm) were fed into a twin-screw extruder (screw diameter: 39.8 mm, L/D: 40) at a feeding rate of 15 kg/hr, followed by melt extrusion at a screw speed of 360 rpm and at an extrusion temperature of 210°C. A strand-shaped extrudate obtained through melt extrusion was cooled with water and pelletized into a cylindrical polyolefin resin composition (hereinafter, 'resin pellet') having a weight of 1.0 mg to 1.2 mg and a size of φ0.7 mm × 1 mm by a pelletizer.

Then, 100 parts by weight of the resin pellet was fed together with 300 parts by weight of water containing 0.5% of a dispersing agent (Manufacturer: LG Chemical Co., Ltd., Product Name: TWEEN-60, Polyoxyethylene Sorbitan Monostearate) into an autoclave. Then, carbon dioxide (CO₂) was fed as a foaming agent into the autoclave, followed by heating the interior of the autoclave to 144°C and adjusting the interior pressure of the autoclave to 45 bar while stirring the autoclave. Then, the content of the autoclave was exposed to air to produce foam. Here, an expansion magnification was set to 30 times and the foam included expanded cells having an average size of 150 µm.

Thereafter, the foam was dried in an oven at 60°C for 24 hours. The dried foam was left at room temperature under atmospheric pressure for 48 hours and was fed into a hollow mold (diameter: 370 mm, length: 270 mm, cylindrical mold with a cylindrical pin (diameter: 35 mm, length: 270 mm) for formation of a hollow hole disposed at the center thereof). Then, saturated steam was fed into the mold (pressure: 2.5 bar) for 30 sec to achieve fusion between the foam particles, followed by drying in the oven at 60°C for 24 hours, thereby preparing a hollow buoy.

### Examples 2 and 3

Hollow buoys were manufactured in the same manner as in Example 1 except that the content of each of the random PP and EOR was adjusted as listed in Table 1.

### Comparative Example 1

A general buoy was manufactured in the same manner as in Example 1 except that a general mold (diameter: 370 mm, length: 270 mm, cylindrical mold with no cylindrical pin for formation of a hollow hole disposed at the center thereof) was used instead of the hollow mold and the content of each of the random PP and EOR was adjusted as listed in Table 1.

### Comparative Examples 2 and 3

Hollow buoys were manufactured in the same manner as in Example 1 except that the content of each of the random PP and EOR was adjusted as listed in Table 1.

### Comparative Example 4

A hollow buoy was manufactured in the same manner as in Example 1 except that homo polypropylene (Manufacturer: Lotte Chemical Co., Ltd., Product Name: J-360, Homo PP) was used instead of the random PP and the content of each of the homo PP and EOR was adjusted as listed in Table 1.

### <Evaluation method>

### 1. Mechanical properties

Tensile strength (kgf/cm²) and elongation (%) of the buoys manufactured in Examples 1 to 3 and Comparative Examples 1 to 4 were measured using a universal tester (Universal Materials Testing Machine, Manufacturer: Instron) in accordance with ISO 1798.

### 2. Absorption rate (%)

Each of the buoys manufactured in Examples 1 to 3 and Comparative Examples 1 to 4 was dipped into water for 24 hours and water remaining on the surface of the buoy was wiped off, followed by measuring the wet weight to evaluate the absorption rate based on variation in mass of the molded article before and after the buoy was dipped into water.

### 3. Fusing rate (%)

Each of the buoys manufactured in Examples 1 to 3 and Comparative Examples 1 to 4 was bent and fractured to measure the fusing rate through a microscope. Specifically, on the fracture surface of the buoy, a well-welded portion was observed in a cracked or split form through fracture inside the foam particle, whereas a poorly-welded portion was observed on an exposed surface of the particle through fracture at an interface between the foam particles. Therefore, the ratio of foam particles subjected to internal fracture to all of the foam particles observed on the fracture surface of the buoy was calculated as the fusing rate.

### 4. Shrink rate (%)

Dimensions (diameter, length) of each of the buoys manufactured in Examples 1 to 3 and Comparative Examples 1 to 4 were measured using a graduated ruler and compared with the size of the mold used for molding to calculate the ratio of the product of diameter and length of the molded article to that of the mold as the shrink rate.

### 5. Fracture upon fastening of rope

A standard rope (twist number: 3 twists, weight: 9.6 kg/200 m, standard rope: 10 mm) was wound one turn around a middle portion (in the longitudinal direction) of each of the buoys manufactured in Examples 1 to 3 and Comparative Examples 1 to 4 and was then pulled using a rope tightening tester (Standard motor: 0.4 kW) to observe whether the buoy was fractured. Table 1 show whether the buoy was fractured (∘: fractured, ×: not fractured).

**Table 1**

| | | Example 1 | Example 2 | Example 3 | Comparati ve Example 1 | Comparati ve Example 2 | Comparati ve Example 3 | Comparati ve Example 4 |
|---|---|---|---|---|---|---|---|---|
| A | Random PP (wt%) | 69.9 | 59.9 | 49.9 | 99.9 | 79.9 | 39.9 | - |
| | Homo pp (wt%) | - | - | - | - | - | - | 99.9 |
| B | EOR (wt%) | 30 | 40 | 50 | 0 | 20 | 60 | 0 |
| Talc (wt%) | | 0.1 | 0.1 | 0.1 | 0.1 | 0.1 | 0.1 | 0.1 |

| Molded article shape | | Hollow type | Hollow type | Hollow type | General type | Hollow type | Hollow type | Hollow type |
|---|---|---|---|---|---|---|---|---|
| A:B^{∗} | | 1:0.43 | 1:0.67 | 1:1.0 | 1:0 | 1:0.25 | 1:1.5 | 1:0 |
| Tensile strength (kgf/cm²) | | 4.9 | 4.7 | 4.4 | 2.9 | 3.9 | 4.0 | 5.3 |
| Elongation (%) | | 48 | 52 | 60 | 10 | 29 | 64 | 15 |
| Absorption rate (%) | | 7 | 6 | 6 | 16 | 10 | 6 | 17 |
| Fusing rate (%) | | 86 | 90 | 93 | 30 | 72 | 92 | 50 |
| Shrink rate (%) | | 2.3 | 2.5 | 2.6 | 2.2 | 2.3 | 2.6 | 2.0 |
| Fracture upon fastening of rope | | × | × | × | ○ | ○ | × | ○ |

| | | | | | | | | |
|---|---|---|---|---|---|---|---|---|
| ^{∗}A:B indicates a weight ratio of EOR with reference to Random PP or Homo PP set to 1. | | | | | | | | |

Referring to Table 1, the buoys produced from the resin compositions including the random PP and EOR in a weight ratio of about 1:0.3 to about 1:1.1 (Examples 1 to 3) exhibited good mechanical properties and low absorption rates to reduce fracture due to waves or wind and could minimize reduction in buoyancy due to absorption of seawater. In addition, these buoys had high fusing rates and low shrink rates to secure uniform durability and good surface quality and were not fractured upon the rope fastening test. Thus, it could be seen that these buoys could be advantageously used as buoys typically secured by a rope in use.

Conversely, the buoys produced from the resin compositions including the random PP and EOR not in a weight ratio of about 1:0.3 to about 1:1.1 (Comparative Examples 2 and 3) had poor tensile strength and could be easily fractured due to waves or wind. Moreover, the buoy produced from the resin composition including the random PP and EOR in a weight ratio of less than about 1:0.3 (Comparative Example 2) had a lower elongation, a lower fusing rate and a higher absorption rate than the buoys of Examples 1 to 3, and was fractured upon the rope fastening test. Thus, it could be seen that this buoy was not suitable as a buoy typically secured by a rope in use.

The general buoy produced from the resin composition free from EOR (Comparative Example 1) had poorer properties in terms of mechanical properties, absorption rate and fusing rate than the hollow buoys of Examples 1 to 3 and was fractured upon the rope fastening test. In addition, the buoy produced from the resin composition using homo PP alone instead of the random PP and EOR (Comparative Example 4) had poorer properties in terms of elongation, absorption rate and fusing rate than the hollow buoys of Examples 1 to 3 and was fractured upon the rope fastening test.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A polyolefin resin composition for foam comprising:
a random polypropylene;
a polyolefin elastomer; and
a nucleating agent,
wherein the random polypropylene and the polyolefin elastomer are present in a weight ratio of about 1:0.3 to about 1:1.1.

2. The polyolefin resin composition according to claim 1, comprising: about 49.9 wt% to about 79.9 wt% of the random polypropylene; about 20 wt% to about 50 wt% of the polyolefin elastomer; and about 0.01 wt% to about 0.5 wt% of the nucleating agent.

3. The polyolefin resin composition according to claim 1 or 2, wherein the polyolefin elastomer comprises at least one selected from the group consisting of ethylene-butene rubber (EBR), ethylene-octene rubber (EOR), ethylene-propylene rubber (EPR), and ethylene-propylene diene monomer rubber (EPDM).

4. The polyolefin resin composition according to any one of claims 1 to 3, wherein the nucleating agent comprises at least one selected from the group consisting of talc, zeolite, calcium carbonate, silica, kaolin, and clay.

5. The polyolefin resin composition according to any one of claims 1 to 4, further comprising: at least one additive selected from the group consisting of an antioxidant, a UV stabilizer, a flame retardant, a coloring agent, a plasticizer, a heat stabilizer, a slip agent, and an antistatic agent.

6. The polyolefin resin composition according to claim 5, wherein the additive is present in an amount of about 0.1 parts by weight to about 15 parts by weight relative to 100 parts by weight of the resin composition.

7. A polyolefin resin foam produced from the polyolefin resin composition according to any one of claims 1 to 6.

8. The polyolefin resin foam according to claim 7, wherein the foam comprises expanded cells having an average diameter of about 30 µm to about 180 µm.

9. A molded article produced from the polyolefin resin foam according to claim 7 or 8.

10. The molded article according to claim 9, wherein the molded article is a buoy.

11. The molded article according to claim 9 or 10, wherein the molded article comprises a hollow hole.
